# EUROPEAN PATENT SPECIFICATION

(11) **EP 1 761 332 B1**
(45) Date of publication and mention of the grant of the patent: **01.09.2010**
(21) Application number: 05738361.4
(22) Date of filing: 26.04.2005
(51) Int. Cl.: B01J 21/16

(54) **PROCESS FOR THE PREPARATION OF AN ADDITIVE-CONTAINING ANIONIC CLAY**
VERFAHREN ZUR HERSTELLUNG EINER ADDITIVHALTIGEN ANIONISCHEN TONERDE
PROCÉDÉ DE PRÉPARATION D'UNE ARGILE ANIONIQUE CONTENANT DES ADDITIFS

(30) Priority: 26.04.2004 US 565493 P; 05.08.2004 EP 04077232
(43) Date of publication of application: 14.03.2007
(73) Proprietor: Albemarle Netherlands B.V., 3818 LH Amersfoort (NL)
(72) Inventor: JONES, William, Cambridge CB2 2NJ (GB); STAMIRES, Dennis, Dana Point, CA 92629 (US); O'CONNOR, Paul, NL-3871 KM Hoevelaken (NL); BRADY, Michael, F., Studio City, CA 91604 (US)
(74) Representative: Rasser, Jacobus Cornelis
(86) International application number: PCT/EP2005/004558
(87) International publication number: WO 2005/102515

(56) References cited:
- EP-A- 0 557 764
- WO-A-02/068329
- US-A- 6 028 023
- US-A1- 2003 049 189
- US-B1- 6 479 421

## Description

The present invention relates to the preparation of an additive-containing anionic clay.

Anionic clays have a crystal structure consisting of positively charged layers built up of specific combinations of divalent and trivalent metal hydroxides between which there are anions and water molecules. Hydrotalcite is an example of a naturally occurring anionic clay wherein Mg is the divalent metal, Al is the trivalent metal, and carbonate is the predominant anion present. Meixnerite is an anionic clay wherein Mg is the divalent metal, Al is the trivalent metal, and hydroxyl is the predominant anion present.

A variety of terms is used to describe the material that is referred to in this specification as an anionic clay, such as hydrotaicite-like material and layered double hydroxide. In this specification we refer to these materials as anionic clays, comprising within that term hydrotalcite-like materials and layered double hydroxides.

For several applications the presence of additives, both metals and non-metals, within the anionic clay is desirable. These additives are used to alter or enhance certain properties of the anionic clay. For instance, Ce and V are added to the anionic clay to obtain material suitable for SOₓ removal In FCC.

The prior art describes various methods for preparing addifive-containing anionic clays.

For instance, EP 0 278 535 describes the preparation of an additive-containing anionic clay by co-precipitating a divalent metal salt, a trivalent metal-salt, and a rare earth metal salt out of an aqueous solution, followed by aging, filtering, washing, and drying of the precipitate. Unfortunately, this method generally results in an inhomogeneous distribution of the additive in the anionic clay. Furthermore, the additive may negatively affect the yield of anionic clay because, e.g., it requires a different pH range for precipitation than the divalent and/or trivalent metal salt, or because it affects the pH of the solution In such a way as to inhibit precipitation of the divalent and/or the divalent metal salt. In addition, this method requires the use of divalent and trivalent waster-soluble metal salts, which are relatively expensive and which use requires (i) washing and filtering procedures in order to remove the anions, leading to waste water streams, and/or (11) the emission of environmentally harmful gases upon heating of the resulting material (e.g. NOₓ, HCl, SOₓ).

Another way of introducing an additive into an anionic clay is by way of impregnation of an already prepared anionic clay, as disclosed in WO 99/49001. This, however, generally leads to precipitation of the additive as a separate phase next to the anionic clay and/or deposition of additive mainly on the outer surface of the anionic clay particles.

US 6,028,023 discloses the preparation of an anionic clay by preparing a mixture comprising a divalent metal-containing compound and a trivalent metal-containing compound under conditions such that a product obtained from the reaction mixture is a non-anionic clay compound, heat treating the non-anionic clay compound, and hydrating the heat treated non-anionic clay impound to form an anionic clay compound. The reaction mixture may contain a metallic oxidant, such as Ce, V, Pd, Pt, etc.

It has now been found that the homogeneity of the additive distribution within the so-obtained anionic clay can be further improved. In addition, smaller additive crystals can be obtained within the anionic clay. Such smaller additive crystallites provide better Interaction with gaseous species during catalytic processes.

The object of the present Invention is to provide a Process for the preparation of an additive-containing anionic clay which results in a more homogeneous additive distribution and/or smaller additive crystallites than the prior art methods.

This objective is achieved by the process according to the present invention. This process comprises the steps of:
a) milling a physical mixture of a divalent metal compound and a trivalent metal compound,
b) calcining the physical mixture at a temperature in the range 200-800°C, and
c) hydrating the calcined mixture in aqueous suspension to form the additive-containing anionic clay,
   wherein an additive is present in the physical mixture and/or the aqueous suspension of step c).

In this process a physical mixture of divalent and trivalent metal compound is prepared and subsequently calcined. The term "physical mixture" in this specification refers to a mixture of the indicated compounds, either in a dry or aqueous state, which compounds have not reacted with each other to any significant extent before calcination step b). Hence, the physical mixture has not been aged to form an anionic clay before calcination step b).

However, if the physical mixture is formed in aqueous suspension, even without an aging step the formation of anionic clay cannot be fully excluded. In any case, formation of more than 10 wt% of anionic davy, based on the total solids content, must be prevented. Preferably, less than 6 wt% of anionic clay is formed, more preferably less than 2 wt% of anionic clay is formed, and most preferably no anionic clay is formed at all before the physical mixture is calcined.

In this specification the term 'milling' is defined as any method that results in reduction of the particle size. Such a particle size reduction can at the same time result in the formation of reactive surfaces and/or heating of the particles. Instruments that can be used for milling include ball mills, high-shear mixer, colloid mixers, and electrical transducers that can introduce ultrasound waves Into a slurry. Low-shear mixing, i.e. stirring that is performed essentially to keep the ingredients In suspension, is not regarded as 'milling'.

The physical mixture can be milled as dry powder or in suspension. It will be clear that, when the physical mixture is in suspension, at least one of the metal compounds present In the mixture (so, the divalent metal compound, the trivalent metal compound, or both) must be water-insoluble.

### Divalent metal compound

Suitable divalent metals include magnesium, zinc, nickel, copper, iron, cobalt, manganese, calcium, barium, strontium, and combinations thereof. The most preferred divalent metal compound is magnesium.

Suitable zinc, nickel, copper, iron, cobalt, manganese, calcium, strontium, and barium compounds are their respective water-insoluble oxides, hydroxides, carbonates, hydroxycarbonates, bicarbonates, and clays and - generally water-soluble - salts like acetates, hydroxyacetates, nitrates, and chlorides.

Suitable water-insoluble magnesium compounds include magnesium oxides or hydroxides such as MgO, Mg(OH)₂, magnesium carbonate, magnesium hydroxy carbonate, magnesium bicarbonate, hydromagnesite and magnesium-containing clays such as dolomite, saponite, and sepiolite. Suitable water-soluble magnesium compounds are magnesium acetate, magnesium formate, magnesium (hydroxy) acetate, magnesium nitrate, and magnesium chloride.

Preferred divalent metal compounds are oxides, hydroxides, carbonates, hydroxycarbonates, bicarbonates, and (hydroxy)acetates, as these materials are relatively inexpensive. Moreover, these materials do not leave undesirable anions In the additive-containing anionic clay which either have to be washed out or will be emitted as environmentally harmful gases upon heating.

### Trivalent metal compound

Suitable trivalent metals include aluminium, gallium, iron, chromium, vanadium, cobalt, manganese, nickel, indium, cerium, niobium, lanthanum, and combinations thereof. Aluminium is the most preferred trivalent metal. Suitable gallium, iron, chromium, vanadium, cobalt, nickel, and manganese compounds are their respective water-Insoluble oxides, hydroxides, carbonates, hydroxycarbonates, bicarbonates, alkoxides, and clays and - generally water-soluble - salts like acetates, hydroxyacetates, nitrates, and chlorides. Suitable water-insoluble aluminium compounds include aluminium oxides and hydroxides such as transition alumina, aluminium trihydrate (Bauxite Ore Concentrate, gibbsite, bayerite) and its thermally treated forms (including flash-calcined aluminium trihydrate), sols, amorphous alumina, and (pseudo)boehmite, aluminium-containing clays such as kaolin, sepiolite, bentonite, and modified clays such as metakaolin. Suitable water-soluble aluminium salts are aluminium nitrate, aluminium chloride, aluminium chlorohydrate, and sodium aluminate.

Preferred trivalent metal compounds are oxides, hydroxides, carbonates, bicarbonates, hydroxycarbonates, and (hydroxy)acetates, as these materials are relatively inexpensive. Moreover, these materials do not leave undesirable anions in the additive-containing anionic clay which either have to be washed out or will be emitted as environmentally harmful gases upon heating:

### Step a)

The first step in the process of the invention involves milling of a physical mixture of the divalent and the trivalent metal compound.

This physical mixture can be prepared in various ways. The divalent and trivalent metal compound can be mixed as dry powders or In aqueous) suspension thereby forming a slurry, a sol, or a gel. In the latter case, the divalent and trivalent metal compound are added to the suspension as powders, sols, or gels and the preparation and milling of the mixture is followed by drying. If the physical mixture is prepared in aqueous suspension, dispersing agents can be added to the suspension. Suitable dispersing agents include surfactants, phosphates, sugars, starches, polymers, gelling agents, swellable clays, etc. Acids or bases may also be added to the suspension.

The molar ratio of divalent to trivalent metal in the physical mixture preferably ranges from 0.01 to 10, more preferably 0.1 to 5, and most preferably 1 to 3.

The physical mixture is milled, either as dry powder or In suspension. In addition to milling of the physical mixture, the divalent metal compound and the trivalent metal compound may be milled individually before forming the physical mixture.

When the physical mixture is milled in suspension, the mixture is wet milled during about 1-30 minutes at room temperature, for instance in a ball mill, a bead mill, a sand mill, a colloid mill, a high shear mixer, a kneader, or by using ultrasound. After wet milling and before calcination, the physical mixture must be dried.

The preferred average size of the particles obtained after milling is about 0.1 to 10 microns, more preferably about 0.5 to 5 microns, most about 1-3 microns.

The temperature during milling may be ambient or higher. Higher temperatures may for instance result naturally from the milling process or may be generated by external heating sources. Preferably, the temperature during milling ranges from 20 to 90°C, more preferably from 30 to 50°C.

### Step b)

The physical mixture is calcined at a temperature in the range of 200-800°C, more preferably 300-700°C, and most preferably 350-600°C. Calcination is conducted for 0.25-25 hours, preferably 1-8 hours, and most preferably 2-6 hours. All commercial types of calciners can be used, such as fixed bed or rotating calciners.

Calcination can be performed in various atmospheres, e.g, in air, oxygen, inert atmosphere (e.g. N₂), steam, or mixtures thereof.

The so-obtained calcined material must contain hydratable oxide. The amount of hydratable oxide formed depends on the type of divalent and trivalent metal compound used and the calcination temperature. Preferably, the calcined material contains 10-100% of hydratable oxide, more preferably 30-100%, even more preferably 50-100%, and most preferably 70-100% of hydratable oxide. The amount of hydratable oxide formed In step b) is equivalent to and calculated from the amount of anionic clay obtained in step c). This amount-can be determined by mixing various known amounts of pure anionic clay with samples of the hydrated product of step c). Extrapolation of the relative intensities of anionic clay to non-anionic clay in these mixed samples - as measured with Powder X-Ray Diffraction (PXRD) - can then be used to determine the amount of anionic clay in the hydrated product. An example of an oxide that is not hydratable is a spinel-type oxide.

### Step c)

Hydration of the calcined material is conducted by contacting the calcined mixture with a water or an aqueous solution of anions. This can be done by passing the calcined mixture over a filter bed with sufficient liquid spray, or by suspending the calcined mixture in the liquid. The temperature of the liquid during hydration is preferably between 25 and 350°C, more preferably between 25 and 200°C, most preferably between 50 and 150°C, the temperature of choice depending on the nature of the divalent and trivalent metal compound used. Hydration is performed for about 20 minutes to 20 hours, preferably 30 minutes to 8 hours, more preferably 1-4 hours.

During hydration, the suspension can be milled by using high-shear mixers, colloid mixers, ball mills, kneaders, ultrasound, etc.

Hydration can be performed batch-wise or continuously, optionally in a continuous multi-step operation according topre-pubiished United States patent application no. 2003-0003035. For example, the hydration suspension is prepared in a feed preparation vessel, whereafter the suspension is continuously pumped through two or more conversion vessels. Additives, acids, or bases, if so desired, can be added to the suspension In any of the-conversion vessels. Each of the vessels can be adjusted to its own desirable temperature.

During hydration, anions can be added to the liquid. Examples of suitable anions include inorganic anions like NO₃⁻, NO₂⁻, CO₃²⁻, HCO₃⁻, SO₄²⁻, SO₃NH₂ SCN⁻, S₂O₆²⁻, SeO₄⁻, F⁻, Cl⁻, Br⁻, I⁻, ClO₃⁻, ClO₄⁻**,** BrO₃⁻, and IO₃⁻**,** silicate, aluminate, and metasilicate, organic anions like acetate, oxalate, formate, long chain carboxylates (e.g. sebacate, caprate and caprylate (CPL)), alkylsufates (e.g. dodecylsulfate (DS) and dodecylbenzenesulfate), stearate, benzoate, phthalocyanine tetrasulfonate, and polymeric anions such as polystyrene sulfonate, polyimides, vinylbenzoates, and vinyldiacrylates, and pH-dependent boron-containing anions, bismuth-containing anions, thallium-containing anions, phosphorus-containing anions, silicon-containing anions, chromium-containing anions, vanadium-containing anions, tungsten-containing anions, molybdenum-containing anions, iron-containing anions, niobium-containing anions, tantalum-containing anions, manganese-containing anions, aluminium-containing anions, and gallium-containing anions.

### The additive

The additive to be used in the process according to the present invention is a compound comprising an element selected from the group of alkaline earth metals (for instance Mg, Ca and Ba), Group IIIA transition metals, group IVA transition metals (e.g. Ti, Zr), Group VA transition metals (e.g. V, Nb), Group VIA transition metals (e.g. Cr, Mo, W), Group VIIA transition metals (e.g. Mn), Group VIIIA transition metals (e.g. Fe, Co, Ni, Ru, Rh, Pd, Pt), Group IB transition metals (e.g. Cu), Group IIB transition metals (e.g. On), Group IIIB elements (e.g. B, Al, Ga), Group IVB elements (e.g. Si, Sn), Group VB elements (e.g. P), lanthanides (e.g. La, Ce), and mixtures thereof, provided that the element differs from the metals constituting the divalent and the trivalent metal compound of step a).

Preferred elements are La, Ce, V, Mo, W, P, Pt, Pd, and Nb.

The additive is preferably an oxide, hydroxide, carbonate, or hydroxycarbonate of the desired element.

One or more additive(s) is/are present in the physical mixture and/or to the aqueous suspension of step c). Preferably, an additive is already present in the physical mixture.

If present in the physical mixture, the additive can be added to the physical mixture before or during milling step a), during calcination step b), or between milling step a) and calcination step b). Addition during calcination requires the use of a calciner with sufficient mixing capability that can be effectively used as mixer as well as calciner.

The additive can be added to the physical mixture in step a) and the suspension of step c) as a solid powder, in suspension or, preferably, in solution. If added during calcination, it is added In the form of a powder.

### Additional calcination and hydration steps

The resulting additive-containing anionic clay can be-subjected to an additional calcination and optionally an additional hydration step.

The so-formed calcined material can be used as a catalyst or sorbent for various purposes, such as FCC processes. If this calcination is followed by a subsequent hydration, an additive-containing anionic clay is formed analogous to the one formed after the first hydration step, but with an increased mechanical strength.

These second calcinations and hydration steps may be conducted under conditions which are either the same or different from the first calcination and hydration steps.

Additional additives may be added during this additional calcination step and/or during this hydration step. The additives disclosed under the heading 'additive' above may all be suitably used for this purpose. These additional additives can be the same or different from the additive present In the physical mixture and/or the aqueous suspension of step c).

Furthermore, during this additional hydration step, anions can be added. Suitable anions are the ones mentioned above in relation to the first hydration step. The anions added during the first and the additional hydration step can be the same or different.

### Compositions comprising the additive-containing anionic clay

If so desired, the additive-containing anionic clay prepared according to the process of the present invention can be mixed with conventional catalyst or sorbent ingredients such as silica, alumina, aluminosilicates, zirconia, titania, boria, (modified) clays such as kaolin, acid leached kaolin, dealuminated kaolin, smectites, and bentonite, (modified or doped) aluminium phosphates, zeolites (e.g. zeolite X, Y, REY, USY, RE-USY, or ZSM-5, zeolite beta, silicalites), phosphates (e.g. meta or pyro phosphates), pore regulating agents (e.g. sugars, surfactants, polymers), binders, fillers, and combinations thereof.

The additive-containing anionic clay, optionally mixed with one or more of the above conventional catalyst components, can be shaped to form shaped bodies. Suitable shaping methods include spray-drying, pelletising, extrusion (optionally combined with kneading), beading, or any other conventional shaping method used in the catalyst and absorbent fields or combinations thereof.

### Use of the additive-containing anionic clay

The additive-containing anionic clay prepared by the process according to the invention is very suitable for use as sulfur oxide sorbent material. Hence, the material can be incorporated for this purpose in FCC catalysts or FCC catalyst additives. Additionally, the additive-containing anionic clay can be used for the adsorption of sulfur oxide emission from other sources, like power plants.

As sulfur oxides sorbent materials are generally good nitrogen oxide sorbent materials, the additive-containing anionic clay will likewise be suitable as nitrogen oxide sorbent material in, e.g., FCC catalysts, FCC catalyst additives, etc.

Furthermore, it can be used for other purposes, such as the removal of gases like HCN, ammonia, Cl₂, and HCl from steel mills, power plants, and cement plants, for reduction of the sulphur and/or nitrogen content In fuels like gasoline and diesel, as additives for the conversion of CO to CO₂, and in or as catalyst compositions for Fischer-Tropsch synthesis, hydroprocessing (hydrodesulfurisation, hydrodenitrogenation, demetaliisation), hydrocracking, hydrogenation, dehydrogenation, alkylation, isomerisation, Friedel Crafts processes, ammonia synthesis, etc.

If so desired, the additive-containing anionic clay can be treated with organic agents, thereby making the surface of the clay - which is generally hydrophilic in nature - more hydrophobic. This allows for the additive-containing anionic clay to disperse more easily in organic media.

When applied as nanocomposites (i.e. particles with a diameter less then about 500 nm), the additive-containing anionic clay can suitably be used in plastics, resins, rubber, and polymers. Nanocomposites with a hydrophobic surface, for instance obtained by treatment with an organic agent, are especially suited for this purpose.

### EXAMPLES

### Comparative Example 1

An aqueous physical mixture comprising 41.28 g Gibbsite (the trivalent metal compound), and 64.03 g MgO (the divalent metal compound) was prepared in 185 g distilled water. To the resulting slurry, a cerium nitrate solution comprised of 27.56 g cerium nitrate (the additive) dissolved in 27.1 g of distilled water was added. The pH of the resulting slurry was adjusted to 9 with ammonium hydroxide.

After the pH adjustment, the slurry was immediately dried in a convection oven at 110°C. The dried powder was calcined at 500°C for four hours.

PXRD did not show anionic clay formation before calcination.

A 20.0 g portion of the resulting calcined powder was hydrated in an ammonium metavanadate solution comprising 1.29 g of ammonium metavanadate (an additive) in 175 g distilled water. Hydration was conducted at -85°C overnight. The slurry was then faltered, washed with distilled water and dried at 110°C.

The amount of hydratable oxide (measured as described in the specification above) present after calcination was 80%.

### Examples 2

Comparative Example 1 was repeated, except that after the pH adjustment, the slurry was high shear mixed in a Waring blender for 20 minutes before being dried at 110°C.

Also here, PXRD did not show anionic clay formation before calcination. The amount of hydratable oxide present after calcination was 80%.

### Comparative Example 3

Comparative Examples 1 was repeated, except that the 20.0 g portion of the calcined powder was hydrated in 650 g of a 1M sodium carbonate solution overnight at 85°C.

The amount of hydratable oxide present after calcination was 70%.

### Example 4

Comparative Example 3 was repeated, except that after the pH adjustment, the slurry was high shear mixed in a Waring blender for 20 minutes before being dried at 110°C.

Also here, PXRD did not show anionic clay formation before calcination.

The amount of hydratable oxide present after calcination was 70%.

### Comparative Examples 5

An aqueous physical mixture was prepared by dispersing 35.17 g Gibbsite, 48.84 g calcium carbonate, and 27.27 g MgO in 115 g distilled water. To the resulting slurry, a cerium nitrate solution comprising 26.71 g cerium nitrate dissolved in 26.2 g of distilled water was added. The pH of the resulting slurry was adjusted to 9 with ammonium hydroxide. The slurry was immediately dried in a convection oven at 110°C. The dried powder was calcined at 500°C for four hours.

PXRD did not show anionic clay formation before calcination.

A 20.0 g portion of the resulting calcined powder was hydrated in an ammonium metavanadate solution comprised by dissolving 1.29 g of ammonium metavanadate in 175 g distilled water overnight at 85°C. The slurry was then filtered, washed with distilled water and dried at 110°C.

The amount of hydratable oxide present after calcination was 10%.

### Example 6

Comparative Example 5 was repeated, except that after the pH adjustment, the slurry was high shear mixed in a Waring blender for 20 minutes before being dried at 110°C.

PXRD did not show anionic clay formation before calcination.

The amount of hydratable oxide present after calcination was 10%.

### Example 7

Example 2 was repeated, except that a 15.0 g portion of the matched powder was hydrated in a ammonium metavanadate solution comprised by dissolving 2.89 g of ammonium metavanadate in 136 g distilled water overnight at 85°C. The amount of anionic clay in the hydrated product (as determined by the method indicated in the specification above) was 80%.

### Example 8

Powder X-ray diffraction (PXRD) patterns of the samples of Exemples 1-6 indicated as reflection at 28.5° 2-theta, indicating the presence of CeO₂ (See ICDD file 81-0792, using CuK_{α} radiation.

The full width at half maximum (FWHM) of this reflection in the different samples was determined. See Table 2.

**Table 2**

| Example | FWHM (° 2-theta) |
|---|---|
| 1 (comp.) | 2.03 |
| 2 | 2.76 |
| 3 (comp.) | 2.03 |
| 4 | 2.16 |
| 5 (comp.) | 3.1 |
| 6 | too broad to be measured |

It is generally known that the crystallite size is inversely related to the FWHM of an Individual peak. The broader the peak, the smaller the crystallite size.

So, the above results show that milling of the physical mixtures results In the formation of smaller additive crystallites, indicating a more homogeneous additive distribution.

### Example 9

The products of Examples 2, 4, 6, and 7 were tested for their de-SOₓ ability in FCC processes using the thermographimetric test described in Ind. Eng. Chem. Res. Vol. 27 (1988) pp. 1356-1360. A standard commercial de-SOₓ additive was used as a reference.

Known weights of the samples and the same weight of the standard commercial additive were heated under nitrogen at 700°C for 30 minutes. Next, the nitrogen was replaced by a gas containing 0.32% SO₂, 2.0% O₂, and balance N₂ with a flow rate of 200 ml/min. After 30 minutes the SO₂ containing gas was replaced by nitrogen and the temperature was reduced to 650°C. After 15 minutes, nitrogen was replaced by pure H₂ and this condition was maintained for 20 minutes. This cycle was repeated 3 times. The sample's SOₓ uptake and its release during hydrogen treatment were measured as the sample's weight change (in %).

The ratio of SOₓ release over SOₓ uptake was defined as the effectiveness ratio The ideal effectiveness ratio is 1, which means that all the SOₓ that was taken up was released again, leading to a longer catalyst life.

Table 2 indicates the effectiveness ratio of the samples prepared relative to the effectiveness ratio of the commercial de-SOₓ additive: the SOₓ improvement.

A SOₓ improvement of 1 means that the prepared sample has the same effectiveness ratio as the commercial additive. An improvement higher than 1 indicated that a higher effectiveness ratio was obtained.

**Table 2**

| Example | SOₓ improvement |
|---|---|
| 2 | 0.98 |
| 4 | 0.97 |
| 6 | 1.85 |
| 7 | 0.98 |

This table shows that the effectiveness ratio of the compositions prepared according to the invention is comparable to and, in case of Example 6, significantly higher than that of a commercial additive. In other words, the compositions prepared according to the invention are very suitable as additives in FCC process for the reduction of SOₓ emissions.

## Claims

1. Process for the preparation of an additive-containing anionic clay comprising the steps of:
a) milling a physical mixture of a divalent metal compound and a trivalent metal compound,
b) calcining the milled physical mixture at a temperature in the range 200-800°C, and
c) hydrating the calcined mixture in aqueous suspension to form the additive-containing anionic clay,
wherein an additive is present in the physical mixture and/or the aqueous suspension of step (c).

2. Process according to claim 1 milling is performed in a ball mill, a bead mill, a sand mill, a colloid mill, a kneader, or a high shear mixer, or by using ultrasound.

3. Process according to any one of the preceding claims wherein the calcination temperature ranges from 300 to 700°C.

4. Process according to claim 3 wherein the calcination temperature ranges from 350 to 600°C.

5. Process according to any one of the preceding claims wherein the divalent metal is selected from the group consisting of Mg, Zn, Ni, Fe, Co, Ca, Sr, Ba, Mn, and Cu.

6. Process according to any one of the preceding claims wherein the trivalent metal is selected from the group consisting of Al, Ga, Fe, Cr, V, Mn, Co, and Ni.

7. Process according to any one of the preceding claims wherein the additive is selected from the group consisting of La, Ce, V, Mo, W, P, Pt, Pd, and Nb.

8. Process according to any one of the preceding claims followed by calcination of the formed additive-containing anionic clay.

9. Process according to claim 8 followed by hydration of the reined additive-containing anionic clay.

## Patentansprüche

1. Verfahren zur Herstellung eines Zusatzstoffe enthaltenden, anionischen Lehms, umfassend die nachfolgenden Schritte:
a) das Zermahlen einer physikalischen Mischung einer zweiwertigen Metallverbindung und einer dreiwertigen Metallverbindung,
b) das Kalzinieren der zermahlenen, physikalischen Mischung bei einer Temperatur im Bereich von 200 - 800°C, und
c) das Hydratisieren der kalzinierten Mischung in wässriger Lösung, um den Zusatzstoffe enthaltenden, anionischen Lehm zu bilden,
wobei ein Zusatzstoff in der physikalischen Mischung und/oder in der wässrigen Lösung von Schritt (c) vorhanden ist.

2. Verfahren nach Anspruch 1, wobei das Zermahlen in einer Kugelmühle, einer Perlmühle, einer Sandmühle, einer Kolloidmühle, einer Knetmaschine oder einem Hochschermischer oder durch Anwendung von Ultraschall durchgeführt wird.

3. Verfahren nach einem der vorstehenden Ansprüche, wobei die Kalzinierungstemperatur zwischen 300 und 700°C liegt.

4. Verfahren nach Anspruch 3, wobei die Kalzinierungstemperatur zwischen 350 und 600°C liegt.

5. Verfahren nach einem der vorstehenden Ansprüche, wobei das zweiwertige Metall ausgewählt ist aus der Gruppe bestehend aus Mg, Zn, Ni, Fe, Co, Ca, Sr, Ba, Mn und Cu.

6. Verfahren nach einem der vorstehenden Ansprüche, wobei das dreiwertige Metall ausgewählt ist aus der Gruppe bestehend aus Al, Ga, Fe, Cr, V, Mn, Co und Ni.

7. Verfahren nach einem der vorstehenden Ansprüche, wobei der Zusatzstoff ausgewählt ist aus der Gruppe bestehend aus La, Ce, V, Mo, W, P, Pt, Pd und Nb.

8. Verfahren nach einem der vorstehenden Ansprüche, gefolgt durch Kalzinierung des gebildeten, Zusatzstoffe enthaltenden, anionischen Lehms.

9. Verfahren nach Anspruch 8, gefolgt durch Hydratisierung des kalzinierten, Zusatzstoffe enthaltenden, anionischen Lehms.

## Revendications

1. Procédé pour la préparation d'une argile anionique contenant des additifs comprenant les étapes suivantes :
a) broyage d'un mélange physique d'un composé de métal divalent et d'un composé de métal trivalent,
b) calcination du mélange physique broyé à une température variant entre 200-800 C° et,
c) hydratation du mélange calciné en suspension aqueuse pour former l'argile anionique contenant un additif,
dans lequel un additif est présent dans le mélange physique et / ou la suspension aqueuse de l'étape (c).

2. Procédé selon la réclamation 1, le broyage est effectué dans un broyeur à billes, un un broyeur à sable, un broyeur colloïdal, un broyeur à couteaux, ou un haut mélangeur de cisaillement ou en utilisant des ultrasons.

3. Procédé selon l'une des revendications précédentes dans lequel la température de calcination varie entre 300 et 700 C°.

4. Procédé selon la réclamation 3 dans lequel la température de calcination varie entre 350 et 600 C°.

5. Procédé selon l'une des revendications précédentes dans lequel le métal divalent est choisi parmi le groupe constitué de Mg, Zn, Ni, Fe, Co, Ca, Sr, Ba, Mn, et Cu.

6. Procédé selon l'une des revendications précédentes dans lequel le métal trivalent est sélectionné dans le groupe constitué de Al,Ga, Fe, Cr, V, Mn, Co, et Ni.

7. Procédé selon l'une des revendications précédentes dans lequel l'additif est choisi parmi le groupe composé de La, Ce, V, Mo, W, P, Pt, Pd et Nb.

8. Procédé selon l'une des revendications précédentes suivi d'une calcination de l'argile anionique formée contenant des additifs.

9. Procédé selon la revendication 8 suivi de l'hydratation de l'argile anionique calcinée contenant des additifs.
